# EUROPEAN PATENT SPECIFICATION

(11) **EP 2 444 309 B1**
(45) Date of publication and mention of the grant of the patent: **06.03.2013**
(21) Application number: 10188286.8
(22) Date of filing: 20.10.2010
(51) Int. Cl.: B62L 1/00, F16D 55/226, F16D 65/14

(54) **Bicycle disc brake**
Fahrradscheibenbremse
Frein à disque pour bicyclette

(43) Date of publication of application: 25.04.2012
(73) Proprietor: Tektro Technology Corporation, Changhua County (TW)
(72) Inventor: Tsai, Szu-Fang, Changhua County (TW)
(74) Representative: Lang, Christian

(56) References cited:
- EP-A2- 0 955 233
- EP-A2- 1 136 349
- EP-A2- 1 342 931
- EP-B1- 1 274 950
- US-A1- 2003 183 460
- US-B1- 6 564 910
- US-B1- 6 659 234

## Description

### BACKGROUND OF THE INVENTION

### 1. Field of Invention

The invention relates to bicycle brakes and more particularly to a bicycle disc brake with improved characteristics.

### 2. Description of Related Art

Disc brake systems are generally recognized as having the capability of generating greater braking force than standard caliper brakes systems for bicycles. These disc brake systems, however, have not gained widespread acceptance. A significant problem with conventional bicycle disc brake systems is inconsistency in the requirements for generating a given kind of braking force. Specifically, in addition to the impact of brake pad wear found in standard brake systems, heat generated by braking can easily result in hydraulic fluid volume changes of at least 10%. Thus, changes in brake system temperatures during a single run can result in significant changes in brake handle travel for a given level of braking force. This makes the bicycle difficult to control. Thus, the need for improvement still exists.

US 6,659,234 B1 relates to a disk-type break device on which the preamble of claim 1 is based. The break device is configured so that, when a bicycle is stopped at high speed and an initial force is generated, when the initial force is larger than the spring forces in the break system, the system buffers the initial force so as to prevent the disk from being clamped overly. In order to achieve this function a main frame having springs and a toothed surface is provided, which is connected to a toothed cam. If a lever is activated the springs are forced and as a consequence the toothed cam is rotated so as to reduce a distance between the toothed cam and a main shaft in dependence on a position of beads between the cam and the main shaft. However, the springs of the main frame have to withstand high forces and therefore have to be quiet strong. Thus, the size of the main frame has a predetermined size and weight.

Starting from the state of the art it is the object of the present application to provide a well-controllable break assembly which has a reduced size and weight.

### SUMMARY OF THE INVENTION

The above-mentioned object is solved by the disk break assembly according to claim 1. Advantageous improvements of the invention are subject matter of dependent claims.

A disc brake assembly for a bicycle comprises a first shell; a second shell threadedly secured to the first shell; a mounting bracket threadedly secured to both the first shell and a fork; a first brake force exertion unit; and a second brake force exertion unit in a relaxed position of the disc brake assembly, a portion of a disc freely passes a gap between brake pad in the second brake force exertion unit and brake pad in the first brake force exertion unit. In response to pulling a brake cable, a spring biased lever counterclockwise pivots to cause the second brake pad to press the disc against the first brake pad.

The above and other objects, features and advantages of the invention will become apparent from the following detailed description taken with the accompanying drawings.

### BRIEF DESCRIPTION OF THE DRAWINGS

FIG. 1 is an exploded view of a disc brake assembly for a bicycle according to the invention;
FIG. 2 is a perspective view of the assembled disc brake assembly;
FIG. 3 is a sectional view taken along line 3-3 of FIG. 2;
FIG. 3A is an enlarged view of the right side of FIG. 3 where each component is manufactured without deviation from its specified value;
FIG. 3B is a view similar to FIG. 3A showing the brake pad and other associated components being not positioned properly due to manufacturing deviation;
FIG. 4 is a view similar to FIG. 3 showing one brake pad moving to urge against a disc so as to, together with the other brake pad, brake the disc in response to pulling a brake cable to rotate the lever; and
FIG. 5 is a side elevation of the disc brake assembly mounted adjacent to a hub of a bicycle wheel.

### DETAILED DESCRIPTION OF THE INVENTION

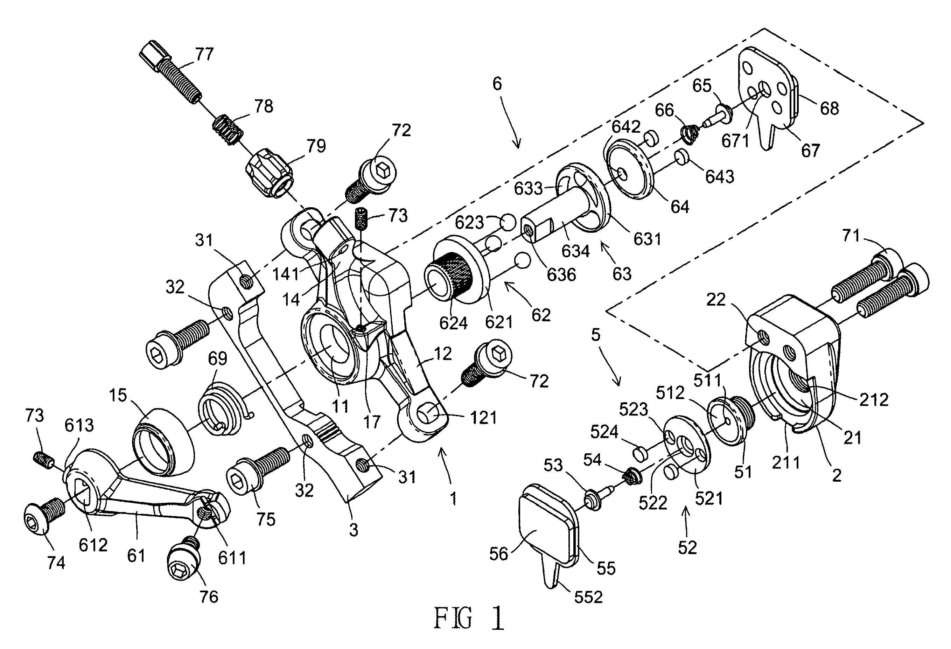

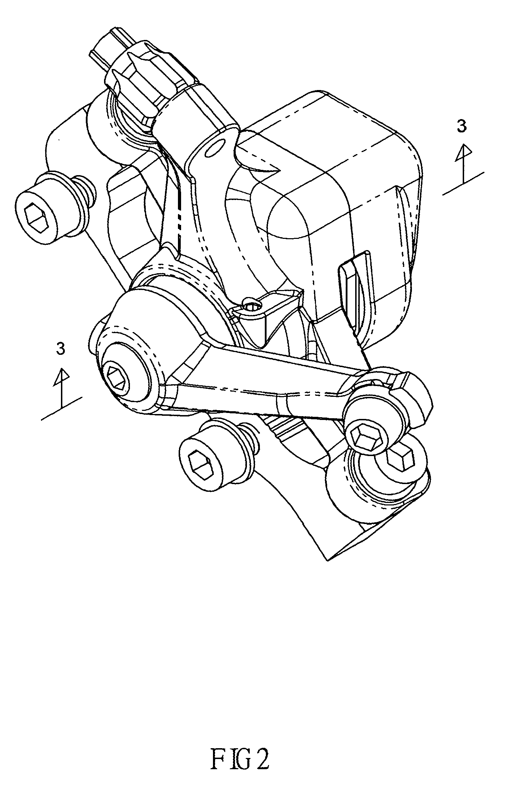

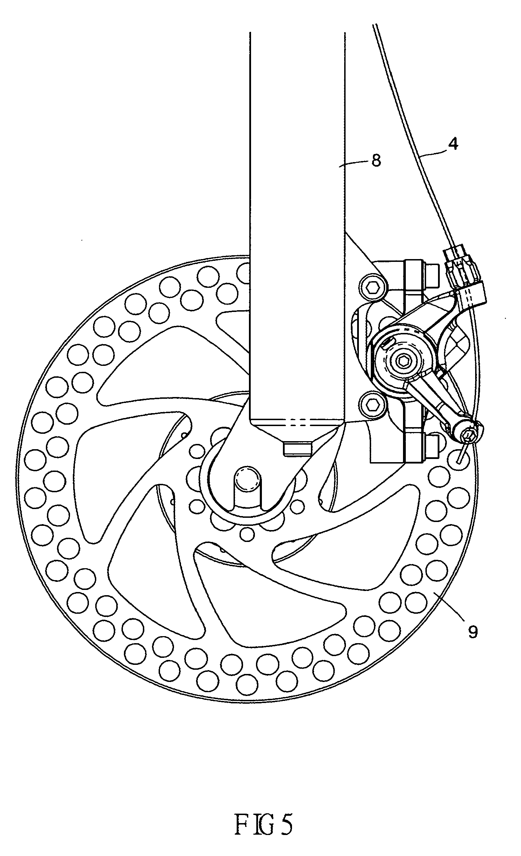

Referring to FIGS. 1 to 5, a disc brake assembly for a bicycle in accordance with the invention comprises the following components as discussed in detail below.

A first shell 1 comprises a stepped-diameter channel 11 having both ends open, two opposite extensions 12 along a virtual line perpendicular to the channel 11, each extension 12 having a hole 121 at an open end, a threaded hole 17 proximate to the opening of the channel 11 facing outward, a projection 14 at an acute angle with respect to one extension 12, the projection 14 having a threaded hole 141 at an open end, a truncated conic, hollow member 15 at the other end of the channel 11, and a cutout 16 at bottom of a recessed portion 13 of the first shell 1 abutted one end of the channel 11.

A second shell 2 comprises a stepped-diameter recess 21 facing the first shell 1, the recess 21 including a bottom cutout 211 and an inner, axial threaded through hole 212, and two spaced threaded holes 22 above the recess 21.

An elongated mounting bracket 3 comprises two first threaded holes 31 at both ends respectively, and two second threaded holes 32 each adjacent to the first threaded hole 31.

A first brake force exertion unit 5 comprises an externally threaded member 51 threadedly secured to the threaded through hole 212 and including an axial bore 511 and a concave head 512, a convex engaging member 52 complementarily engaged with the head 512 and including a flat surface 521 distal the head 512, a stepped-diameter axial bore 522, two circular cavities 523 on the flat surface 521 at both sides of the bore 522 respectively, and two disc-shaped magnet members 524 complementarily received in the cavities 523 respectively, a pin 53 having its shank, with a helical spring 54 put thereon, inserted through the bore 522 into the bore 511 to retain therein, a rectangular first pad holder 55 disposed in the recess 21, the first pad holder 55 being made of ferromagnetic material such as iron so that it can be attracted onto the magnet member 524 (i.e.: the engaging member 52), the first pad holder 55 including a central cavity 551 on one surface with the enlarged head of the pin 53 received therein for positioning, and a protuberance 552 projecting out of the cutout 211, and a first brake pad 56 fixedly secured to the other surface of the first pad holder 55.

A second brake force exertion unit 6 comprises a lever 61 including a threaded hole 611 at one end, an oval-shaped tunnel 612 at the other end, and a transverse threaded hole 613 having one end open to the external and the outer end terminating at the tunnel 612, a first engagement member 62 including an annular, enlarged head 621, three equally spaced, half-spherical cavities 622 on one surface of the head 621, three steel balls 623 slidably partially received in the cavities 622, and a shank 624 distal the cavities 622, the first engagement member 62 engaged with the stepped-diameter inner surface of the channel 11 and a knurled outer surface of the shank 624 capable of providing increased traction to the engaged inner surface of the channel 11, a second engagement member 63 including an annular, enlarged head 631 including a concave surface 632 on one surface and three recesses 633 on the other flat surface, and a shank 634 including an axial hole 635 open to the concave surface 632, and an axial threaded hole 636 at an oval-shaped open end of the shank 634, the threaded hole 636 being spaced from the aligned hole 635, and a helical spring 69 disposed in the other end of the channel 11 to have one end disposed in the inner end of the threaded hole 17 and the other end disposed in the inner end of the threaded hole 613 of the lever 61 which is already tightly put on the other outer end of the hollow member 15 so that they can co-rotate.

The shank 634 of the second engagement member 63 is tightly inserted through the first engagement member 62, the spring 69, and the hollow member 15 to, together with the first engagement member 62, enclose the steel balls 623 and complementarily dispose the oval-shaped open end of the shank 634 in the tunnel 612 of the lever 61 (i.e.: the second engagement member 63 and the lever 61 can co-rotate).

The second brake force exertion unit 6 further comprises a convex engaging member 64 complementarily engaged with the head 631 and including a flat surface 641 distal the head 631, a stepped-diameter axial bore 642, two circular cavities (not shown) on the flat surface 641 at both sides of the bore 642 respectively, and two disc-shaped magnet members 643 complementarily received in the cavities of the engaging member 64 respectively, a pin 65 having its shank, with a helical spring 66 put thereon, inserted through the bore 642 into the bore 635 to retain therein, a rectangular second pad holder 67 disposed in the recessed portion 13 of the first shell 1 abutted one end of the channel 11, the second pad holder 67 being made of ferromagnetic material such as iron so that it can be attracted onto the magnet member 643 (i.e.: the engaging member 64), the second pad holder 67 including a central cavity 671 on one surface with the enlarged head of the pin 65 received therein for positioning, and a protuberance 672 projecting out of the cutout 16, and a second brake pad 68 fixedly secured to the other surface of the second pad holder 67.

A plurality of screws are provided in which two first screws 71 are driven through the threaded holes 22 into two upper threaded holes (not shown) of the first shell 1 to secure the first and second shells 1, 2 together, two second screws 72 are driven through the holes 121 into the first threaded holes 31 respectively to secure the first shell 1 and the mounting bracket 3 together, two third screws 73 in which one third screw 73 is driven into the threaded hole 17 to fasten one end of the spring 69 and the other third screw 73 is driven into the threaded hole 613 to fasten the other end of the spring 69, a fourth screw 74 is driven into the threaded hole 636 to secure the lever 61 and the second engagement member 63 together, two fifth screws 75 are driven through a fork 8 of the bicycle into the second threaded holes 32 to secure the disc brake assembly to the fork 8 of the bicycle, and a sixth screw 76 is driven into the threaded hole 611 to secure one open of a brake cable 4 to the level 61. Moreover, a seventh screw 77, with a torsion spring 78 put thereon, is driven through a cable adjuster 79 into the threaded hole 141 to secure the brake cable 4 to the disc brake assembly.

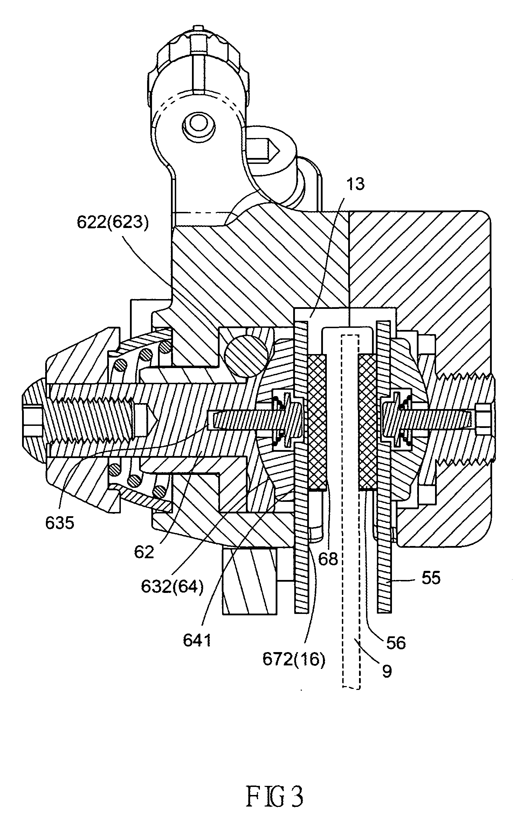

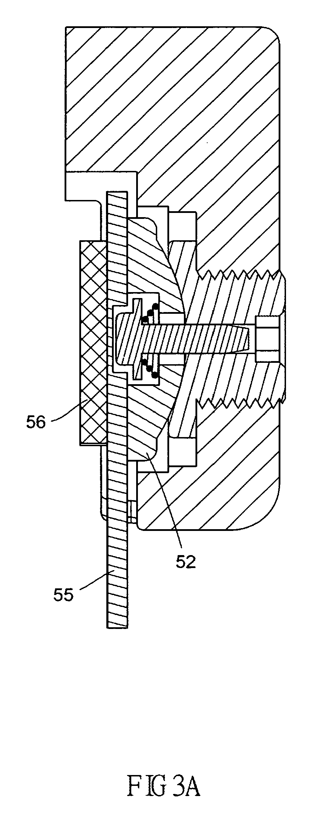

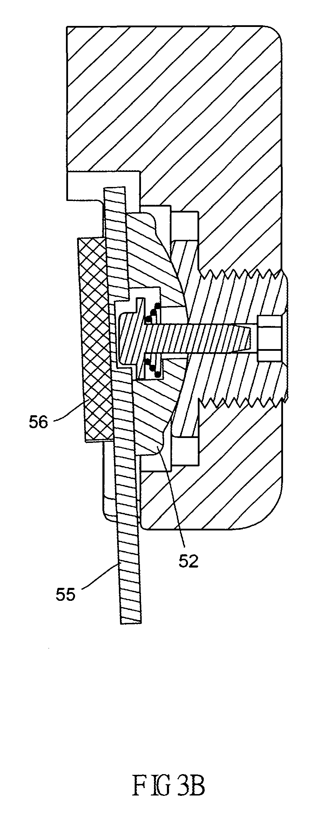

In a relaxed position of the disc brake assembly as shown in FIG. 3, a portion of a disc 9 freely passes a gap between the brake pads 68 and 56.

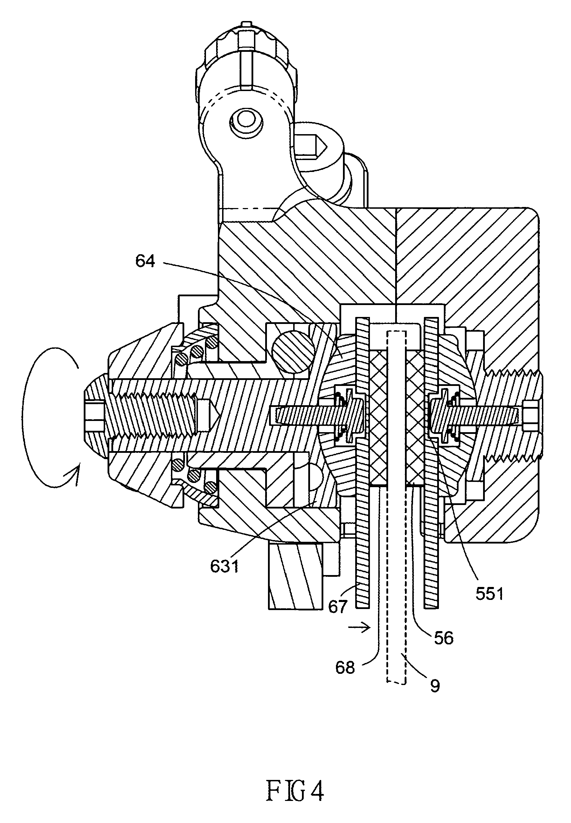

As shown in FIG. 4, the disc brake assembly enters a braking position when a rider presses a brake lever (not shown) against a handlebar (not shown) to pull the brake cable 4. The displaced brake cable 4 causes the lever 61 to counterclockwise pivot toward the cable adjuster 79. And in turn, the hollow member 15 rotates same with the spring 69 being compressed. Also, the second engagement member 63 rotates to have its head 631 disengaged from the first engagement member 62 which remains motionless. The displaced head 631 thus pushes the engaging member 64 inward. And in turn, the engaging member 64 pushes the second pad holder 67 as indicated by arrow. And in turn, the second brake pad 68 presses the disc 9 against the first brake pad 56. The disc 9 will be braked if the rider continues to press the brake lever against the handlebar.

It is understood that a releasing of the brake lever can return the disc brake assembly to the relaxed position (i.e.: from the position of FIG. 4 to that of FIG. 3) due to expansion of the energized spring 69.

Advantageously, the first pad holder 55 and the engaging member 52 are magnetically attached together and the second pad holder 67 and the engaging member 64 are also magnetically attached together. Thus, for example, if the second brake pad 68 is worn out, a rider can easily replace the second brake pad 68 by removing the second pad holder 67.

Preferably, the invention has considered the manufacturing tolerance. That is, the invention permits deviation of the actual value of some parameters of each of at least one of the first brake pad 56, the first pad holder 55, and the engaging member 52 from its specified value. Hence, the invention can be enabled when the actual value of some parameters of each of at least one of the first brake pad 56, the first pad holder 55, and the engaging member 52 does not deviate from its specified value (see FIG. 3A). Also, the invention can be equally enabled when there is deviation of the actual value of some parameters of each of at least one of the first brake pad 56, the first pad holder 55, and the engaging member 52 from its specified value (see FIG. 3B).

While the invention has been described in terms of preferred embodiments, those skilled in the art will recognize that the invention can be practiced with modifications within the scope of the appended claims.

## Claims

1. A disc brake assembly for a bicycle comprising:
a first shell (1), a second shell (2), a mounting bracket (3) threadedly secured to both the first shell (1) and a fork (8), a brake cable (4), a first brake force exertion unit (5) and a second brake force exertion unit (6), the second shell being threadedly secured to the first shell (1), the first brake force exertion unit comprises a first pad holder (55) and a first brake pad (56) being fixedly secured to the first pad holder (55)
**characterized in that**
the first shell (1) comprises a stepped-diameter channel (11) having both ends open, a first recess (13) at one end of the channel (11), two opposite side extensions (12), a projection (14) at an acute angle with respect to one extension (12), a truncated conic, hollow member (15) at the other end of the channel (11), and a cutout (16) at bottom of the first recess (13);
the second shell (2) comprises a second stepped-diameter recess (21) facing the first shell (1), the second recess (21) including a bottom cutout (211) and an axial threaded through hole (212);
the brake cable (4) passes through the projection (14);
the first brake force exertion unit (5) further comprises an externally threaded member (51) threadedly secured to the threaded through hole (212) and including an axial bore (511) and a first concave head (512), a first magnetic, convex engaging member (52) complementarily engaged with the first head (512) of the externally threaded member (51) and including a flat surface (521) distal the externally threaded member (51), and a stepped-diameter axial bore (522), a first spring biased pin (53) partially retained in both axial bores (522, 511), the first pad holder (55) is disposed in the second recess (21) and formed of ferromagnetic material so as to be magnetically attached to the first engaging member (52), the first pad holder (55) includes a central cavity (551) for positioning the first pin (53) and a protuberance (552) projecting out of the cutout (211); and
the second brake force exertion unit (6) comprises a lever (61) having one end secured to one end of the brake cable (4), the lever (61) being partially put on the hollow member (15) and including a tunnel (612) at the other end, a first engagement member (62) including a second head (621), a plurality of half-spherical cavities (622) on one surface of the second head (621), a plurality of steel balls (623) slidably partially received in the cavities (622), and a shank (624) distal the cavities (622), the shank (624) of the first engagement member (62) tightly engaged with the channel (11), a second engagement member (63) including a third head (631) having a concave surface (632) on one surface and a plurality of third recesses (633) on the other surface, and a shank (634) having an axial hole (635) open to the concave surface (632), and an axial threaded hole (636) at an end of the shank (634), the threaded hole (636) being spaced from the axial hole (635), a second magnetic, convex engaging member (64) complementarily engaged with the third head (631) of the second engagement member (63) and including a flat surface (641) distal the second engagement member (63), and a stepped-diameter axial bore (642), a second spring biased pin (65) partially retained in both the axial bores (642, 635), a second pad holder (67) disposed in the first recess (13) and formed of ferromagnetic material so as to be magnetically attached to the second engaging member (64), the second pad holder (67) including a central cavity (671) for positioning the second pin (65) and a protuberance (672) projecting out of the cutout (16), a second brake pad (68) fixedly secured to the second pad holder (67), and a helical spring (69) having one end secured to the level (61) and the other end secured to the first shell (1) wherein the shank (634) of the second engagement member (63) is tightly inserted through the first engagement member (62), the spring (69), and the hollow member (15) to, together with the first engagement member (62), enclose the steel balls (623) and complementarily dispose the end of the shank (634) in the tunnel (612) of the lever (61) so that the second engagement member (63) and the lever (61) can co-rotate;
wherein in a relaxed position of the disc brake assembly, a portion of a disc (9) freely passes a gap between the brake pads (68, 56); and
wherein in response to pulling the brake cable (4), the lever (61) counterclockwise pivots to rotate the hollow member and compress the spring (69), the second engagement member (63) rotates to push the second engaging member (64), and the second engaging member (64) pushes the second pad holder (67) to cause the second brake pad (68) to press the disc (9) against the first brake pad (56).

2. The disc brake assembly of claim 1, wherein the tunnel (612) is oval-shaped and the end of the shank (634) is oval-shaped.

## Patentansprüche

1. Scheibenbremsenanordnung für ein Fahrrad, die umfasst:
ein erstes Gehäuse (1), ein zweites Gehäuse (2), eine Montagehalterung (3), die sowohl mit dem ersten Gehäuse (1) als auch mit einer Gabel (8) durch Verschraubung verbunden ist, ein Bremskabel (4), eine erste Bremskraftausübungseinheit (5) und eine zweite Bremskraftausübungseinheit (6), wobei das zweite Gehäuse sicher an dem ersten Gehäuse verschraubt ist, wobei die erste Bremskraftausübungseinheit eine erste Belaghalterung (55) umfasst und wobei ein erster Bremsbelag (56) sicher an der ersten Belaghalterung (55) befestigt ist,
**dadurch gekennzeichnet, dass**
das erste Gehäuse (1) einen im Durchmesser abgestuften Kanal (11), der an beiden Seiten offen ist, eine erste Ausnehmung (13) an einem Ende des Kanals (11), zwei gegenüberliegende seitliche Verlängerungen (12), einen Vorsprung (14) in einem gegenüber einer Verlängerung (12) spitzen Winkel, ein kegelstumpfförmiges, hohles Element (15) an der anderen Seite des Kanals (11) und einen Ausschnitt (16) an einer Unterseite der ersten Ausnehmung (13) umfasst;
das zweite Gehäuse (2) eine zweite im Durchmesser abgestufte Ausnehmung (21) umfasst, die auf das erste Gehäuse (1) zuweist, wobei die zweite Ausnehmung (21) einen unteren Ausschnitt (211) und ein axiales Durchgangsgewindeloch (212) umfasst;
das Bremskabel (4) durch den Vorsprung (14) hindurch passt;
die erste Bremskraftausübungseinheit (5) ferner umfasst: ein Element mit äußerem Gewinde (51), das sicher in dem Durchgangsgewindeloch (212) verschraubt ist und eine axiale Bohrung (511) und einen ersten konkaven Kopf (512) umfasst, ein erstes magnetisches, konvexes Eingriffselement (52), das mit dem ersten Kopf (512) des Elements mit äußeren Gewinde (51) komplementär in Eingriff steht und eine flache Oberfläche (521) entfernt von dem Element mit äußeren Gewinde (51) umfasst, und eine im Durchmesser abgestufte axiale Bohrung (52), einen ersten federvorgespannten Stift (53), der teilweise in beiden axialen Bohrungen (522, 511) gehalten ist, wobei die erste Belaghalterung (55) in der zweiten Ausnehmung (21) angeordnet ist und aus ferromagnetischem Material so ausgebildet ist, dass er magnetisch an dem ersten Eingriffselement (52) angebracht ist, wobei die erste Belaghalterung (55) einen zentralen Hohlraum (551) zum Positionieren des ersten Stifts (53) und einen Vorsprung (552) umfasst, der aus dem Ausschnitt (211) hervorspringt; und dass
die zweite Bremskraftausübungseinheit (6) einen Hebel (61) umfasst, der ein Ende aufweist, das an einem Ende des Bremskabels (4) befestigt ist, wobei der Hebel (61) teilweise auf dem hohlen Element (15) aufgesetzt ist und einen Tunnel (612) an dem anderen Ende umfasst, wobei ein erstes Eingriffselement (62) einen zweiten Kopf (621), eine Vielzahl von halbkreisförmigen Hohlräumen (622) an einer Oberfläche des zweiten Kopfes (621), eine Vielzahl an gleitend und teilweise in den Hohlräumen (622) aufgenommen Stahlkugeln (623) und einen von den Hohlräumen (622) entfernten Schaft (624) umfasst, wobei der Schaft (624) des ersten Eingriffselements (62) eng mit dem Kanal (11) in Eingriff steht, ein zweites Eingriffselement (63), das einen dritten Kopf (631) mit einer konkaven Fläche (632) an einer Oberfläche und einer Vielzahl an dritten Ausnehmungen (633) an der anderen Oberfläche aufweist, und einen Schaft (624), der ein zu der konkaven Fläche (632) offenes Axialloch (635) und ein axiales Gewindeloch (636) an dem anderen Ende des Schaftes (634) umfasst, wobei das Gewindeloch (636) von dem Axialloch (635) beabstandet angeordnet ist, ein zweites magnetisches, konvexes Eingreifelement (64), das komplementär mit dem dritten Kopf (631) des zweiten Eingriffselements (63) in Eingriff steht und eine flache Fläche (641) entfernt von dem zweiten Eingriffselement (63) und eine axiale, im Durchmesser abgestufte Bohrung (642) umfasst, wobei ein zweiter federvorgespannten Stift (65) teilweise in beiden axialen Bohrungen (642, 635) gehalten ist, eine zweite Belaghalterung (67), die in der ersten Ausnehmung (13) angeordnet ist und aus ferromagnetischem Material so ausgebildet ist, dass sie magnetisch an dem zweiten Eingreifelement (64) angebracht ist, wobei die zweite Belaghalterung (67) einen zentralen Hohlraum (671) zum Positionieren des zweiten Stifts (65) und einen Vorsprung (672) umfasst, der aus dem Ausschnitt (16) hervorspringt, ein zweiter Bremsbelag (68), der sicher an der zweiten Belaghalterung (67) befestigt ist, und eine Schraubenfeder (69), deren eines Ende sicher an dem Hebel (61) und deren anderes Ende sicher an dem ersten Gehäuse (1) befestigt ist, wobei der Schaft (634) des zweiten Eingriffselements (63) eng durch das erste Eingriffselement (62), die Feder (69) und das hohle Element (15) hindurch geführt ist, um zusammen mit dem ersten Eingriffselement (62) die Stahlkugeln (623) einzuschließen und komplementär das Ende des Schaftes (634) in dem Tunnel (612) des Hebels (61) anzuordnen, so dass sich das zweite Eingriffselement (63) und der Hebel (61) zusammen drehen können;
wobei in einer entspannten Position der Scheibenbremsenanordnung ein Bereich einer Scheibe (9) frei die Lücke zwischen den Bremsbelägen (68, 56) passieren kann; und
wobei in Reaktion auf das Ziehen des Bremskabels (4) sich der Hebel (61) entgegen den Uhrzeigersinn dreht, um das hohle Element zu drehen und die Feder (69) zusammen zu drücken, wobei sich das zweite Eingriffselement (63) dreht, um das zweite Eingreifelement (64) zu schieben, und wobei das zweite Eingreifelement (64) die zweite Belaghalterung (67) schiebt, um zu bewirken, dass der zweite Bremsbelag (68) die Scheibe (9) gegen den ersten Bremsbelag (56) drückt.

2. Scheibenbremsensanordnung nach Anspruch 1, wobei der Tunnel (612) ovalförmig ist und das Ende des Schaftes (634) ovalförmig ist.

## Revendications

1. Ensemble de frein à disque pour bicyclette comprenant :
une première enveloppe (1), une seconde enveloppe (2), un support de montage (3) fixé de manière filetée à la fois à la première enveloppe (1) et à une fourche (8), un câble de frein (4), une première unité d'application de force de frein (5) et une seconde unité d'application de force de frein (6), la seconde enveloppe étant fixée de manière filetée à la première enveloppe (1), la première unité d'application de force de frein comprenant un premier support de patin (55),
**caractérisé en ce**
**que** la première enveloppe (1) comprend un canal à diamètre étagé (11) qui a les deux extrémités ouvertes, un premier évidement (13) à une extrémité du canal (11), deux extensions de côté opposées (12), une saillie (14) à un angle aigu par rapport à une extension (12), un élément creux en cône tronqué (15) à l'autre extrémité du canal (11) et une encoche (16) au fond du premier évidement (13) ;
la seconde enveloppe (2) comprend un second évidement à diamètre étagé (21) faisant face à la première enveloppe (1), le second évidement (21) comportant une encoche de fond (211) et un trou traversant fileté axial (212) ;
le câble de frein (4) traverse la saillie (14) ;
la première unité d'application de force de frein (5) comprend de plus un élément fileté à l'extérieur (51) fixé de manière filetée au trou traversant fileté (212) et comprenant une forure axiale (511) et une première tête concave (512), un premier élément de prise convexe magnétique (52) en prise de manière complémentaire avec la première tête (512) de l'élément fileté à l'extérieur (51) et comprenant une surface plate (521) distale par rapport à l'élément fileté à l'extérieur (51) et une forure axiale à diamètre étagé (522), une première broche sollicitée par ressort (53) partiellement retenue dans les deux forures axiales (522, 511), le premier support de patin (55) est disposé dans le second évidement (21) et est formé en matière ferromagnétique de manière à être fixé magnétiquement au premier élément de prise (52), le premier support de patin (55) comprenant une cavité centrale (551) pour positionner la première broche (53) et une protubérance (552) faisant saillie de l'encoche (211) et
la seconde unité d'application de force de frein (6) comprend un levier (61) ayant une extrémité fixée à une extrémité du câble de frein (4), le levier (61) étant partiellement mis sur l'élément creux (15) et comprenant un tunnel (612) à l'autre extrémité, un premier élément d'engrènement (62) comprenant une seconde tête (621), une pluralité de cavités hémisphériques (622) sur une surface de la seconde tête (621), une pluralité de billes d'acier (623) logées de façon coulissante partiellement dans les cavités (622) et une tige (624) distale par rapport aux cavités (622), la tige (624) du premier élément d'engrènement (62) étant en prise de manière étroite avec le canal (11), un second élément d'engrènement (63) comprenant une troisième tête (631) ayant une surface concave (632) sur une surface et une pluralité de troisièmes évidements (633) sur l'autre surface et une tige (634) ayant un trou axial (635) ouvert vers la surface concave (632) et un trou à filet axial (636) à une extrémité de la tige (634), le trou fileté (636) étant espacé du trou axial (635), un second élément de prise convexe magnétique (64) en prise de manière complémentaire avec la troisième tête (631) du second élément d'engrènement (63) et comprenant une surface plate (641) distale par rapport au second élément d'engrènement (63) et une forure axiale à diamètre étagé (642), une seconde broche sollicitée par ressort (65) retenue partiellement dans les deux forures axiales (642, 635), un second support de patin (67) disposé dans le premier évidement (13) et formé en matière ferromagnétique de manière à être fixé au second élément d'engrènement (64), le second support de patin (67) comprenant une cavité centrale (671) pour positionner la seconde broche (65) et une protubérance (672) faisant saillie de l'encoche (16), un second patin de frein (68) attaché de manière fixe au second support de patin (67) et un ressort hélicoïdal (69) ayant une extrémité fixée au levier (61) et l'autre extrémité fixée à la première enveloppe (1) dans laquelle la tige (634) du second élément d'engrènement (63) est insérée étroitement à travers le premier élément d'engrènement (62), le ressort (69) et l'élément creux (15), ensemble avec le premier élément d'engrènement (62), enferment les billes d'acier (623) et disposent de manière complémentaire l'extrémité de la tige (634) dans le tunnel (612) du levier (61) si bien que le second élément d'engrènement (63) et le levier (61) peuvent tourner ensemble,
dans lequel, l'ensemble de frein à disque étant dans une position relâchée, une portion d'un disque (9) passe librement à travers un espace entre les patins de frein (68, 56) et
dans lequel, en réponse à une traction du câble de frein (4), le levier (61) pivote à l'encontre des aiguilles d'une montre pour faire tourner l'élément creux et comprime le ressort (69), le second élément d'engrènement (63) tourne pour pousser le second élément de prise (64) et le second élément de prise (64) pousse le second support de patin (67) pour provoquer que le second patin de frein (68) presse le disque (9) contre le premier patin de frein (56).

2. Ensemble de frein à disque selon la revendication 1 dans lequel le tunnel (612) est de forme ovale et l'extrémité de la tige (634) est de forme ovale.
